# FASCICULE DE BREVET EUROPEEN

(11) **EP 3 716 119 B1**
(45) Date de publication et mention de la délivrance du brevet: **10.09.2025**
(21) Numéro de dépôt: 20165045.4
(22) Date de dépôt: 23.03.2020
(51) Int. Cl.: G06F 21/60, G06F 21/71, G06F 9/30, G06F 9/38, G06F 21/12

(54) **PROCÉDÉ D'AUTHENTIFICATION D'UN PROCESSEUR**
AUTHENTIFIZIERUNGSVERFAHREN EINES PROZESSORS
METHOD FOR AUTHENTICATING A PROCESSOR

(30) Priorité: 29.03.2019 FR 1903343
(43) Date de publication de la demande: 30.09.2020
(73) Titulaire: STMicroelectronics (Rousset) SAS, 13790 Rousset (FR); STMicroelectronics Belgium, 1831 Diegem (BE)
(72) Inventeur: PEETERS, Michael, 1320 TOURINNES-LA-GROSSE (BE); MARINET, Fabrice, 13790 CHATEAUNEUF LE ROUGE (FR)
(74) Mandataire: Cabinet Beaumont

(56) Documents cités:
- US-B1- 6 308 256
- US-B1- 9 177 111
- LASHERMES RONAN ET AL: "Hardware-Assisted Program Execution Integrity: HAPEI", 2 November 2018, ROBOCUP 2008: ROBOCUP 2008: ROBOT SOCCER WORLD CUP XII; [LECTURE NOTES IN COMPUTER SCIENCE; LECT.NOTES COMPUTER], SPRINGER INTERNATIONAL PUBLISHING, CHAM, PAGE(S) 405 - 420, ISBN: 978-3-319-10403-4, XP047494817

## Description

### Domaine technique

La présente description concerne de façon générale les dispositifs électroniques et plus particulièrement les processeurs. La présente description concerne plus particulièrement un mode de fonctionnement d'un processeur.

### Technique antérieure

Un processeur, compris dans la plupart des dispositifs électroniques actuels, est une unité de traitement qui exécute des codes opératoires.

Les processeurs sont fréquemment sujets à des tentatives de clonage et d'émulation des codes opératoires qu'ils doivent exécuter.

Il serait souhaitable d'améliorer au moins en partie certains aspects des procédés de mise en oeuvre connus des processeurs, et, plus particulièrement, d'améliorer au moins en partie les procédés d'authentification exécutés par un processeur.

Le document US 9 177 111 concerne un processeur dont l'unité arithmétique et logique est adaptée à mettre en oeuvre des instructions chiffrées.

Le document US 6 308 256 concerne un processeur dont l'unité arithmétique et logique est adaptée à mettre en oeuvre des instructions chiffrées.

### Résumé de l'invention

Un mode de réalisation pallie tout ou partie des inconvénients des procédés de mise en oeuvre de processeur connus.

Un mode de réalisation pallie tout ou partie des inconvénients des procédés d'authentification connus mis en oeuvre par un processeur.

L'invention est définie par les revendications indépendantes annexées. Des modes de réalisation sont définis par les revendications dépendantes annexées.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente un organigramme illustrant un procédé de mise en oeuvre d'un processeur ;
la figure 2 représente un organigramme (a) illustrant un mode de mise en oeuvre d'un procédé d'authentification exécuté par un processeur, et un schéma bloc (b) illustrant l'architecture d'un processeur ;
la figure 3 représente un organigramme (a) illustrant un autre mode de mise en oeuvre d'un procédé d'authentification exécuté par un processeur, et un schéma bloc (b) illustrant l'architecture d'un autre processeur ; et
la figure 4 représente un organigramme (a) illustrant un autre mode de mise en oeuvre d'un procédé d'authentification exécuté par un processeur, et un schéma bloc (b) illustrant l'architecture d'un autre processeur.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, tous les éléments composant l'architecture d'un processeur ne seront pas décrits, seuls les éléments relatifs aux modes de réalisation décrits seront détaillés, ces éléments s'adaptant aux architectures de processeur usuelles.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

On appelle :
- code opératoire : une opération à exécuter par un processeur et comportant une instruction et un ou plusieurs opérandes ;
- opérande d'un code opératoire : une valeur numérique, logique, alphanumérique, etc., que contient le code opératoire ;
- instruction d'un code opératoire : une opération mathématique ou logique effective que l'on applique à un ou plusieurs opérandes du code opératoire ; et
- commande : un ensemble ou une succession de codes opératoires.

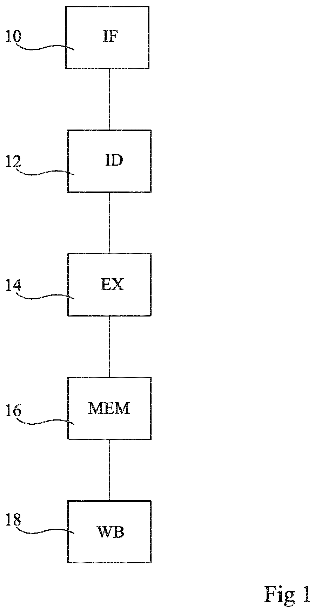

La figure 1 est un organigramme illustrant un procédé de traitement, par un processeur, d'un code opératoire à exécuter. Ce procédé de traitement est un procédé de traitement classique utilisé par un processeur usuel. A titre d'exemple, le processeur est un processeur de type RISC ("Reduced Instruction Set Computing").

A une étape 10 (IF, "Instruction Fetch"), un code opératoire est fourni, par exemple par un bus, au processeur. A titre d'exemple, le code opératoire est chargé à partir d'une mémoire.

A une étape 12 (ID, "Instruction Decode"), le code opératoire est décodé par une unité de décodage du processeur. Plus particulièrement, le code opératoire est converti en une instruction et un ou plusieurs opérandes.

A une étape 14 (EX, "Execution"), le code opératoire décodé, c'est-à-dire l'instruction et le ou les opérandes, est fourni à une unité arithmétique et logique comprise dans le processeur. L'unité arithmétique et logique est chargée de mettre en oeuvre le code opératoire, en réalisant des calculs sur les opérandes du code opératoire conformément à l'instruction du code opératoire à exécuter.

A une étape 16 (MEM, "Memory Access"), l'unité arithmétique et logique demande accès à un registre d'une banque de registres ou pile, pour y stocker le résultat des calculs du code opératoire exécuté. A cette étape, le processeur peut, en outre, accéder à une mémoire externe pour, par exemple, y lire et/ou écrire une ou plusieurs données.

A une étape 18 (WB, "Write Back"), l'unité arithmétique et logique fournit le résultat de ses calculs à la banque de registres pour le stocker dans un registre.

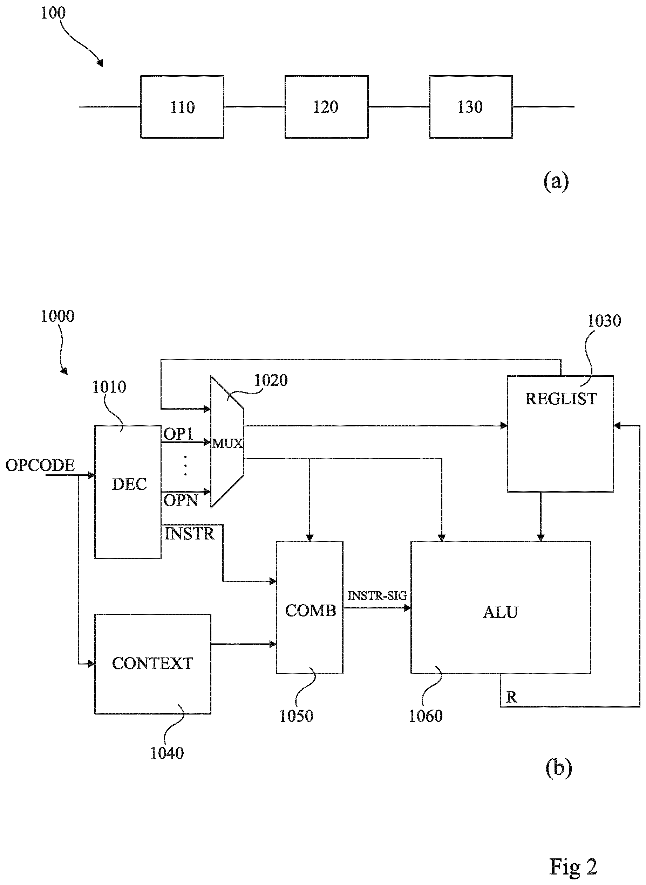

La figure 2 illustre un mode de mise en oeuvre d'un procédé 100 d'authentification d'un processeur 1000. La figure 2 comprend un organigramme (a) illustrant les étapes du procédé d'authentification 100, et un schéma (b), sous forme de blocs, illustrant une architecture simplifiée du processeur 1000.

Le procédé d'authentification 100 comprend :
- une étape 110 de chargement, par le processeur 1000, d'un code opératoire à exécuter ;
- une étape 120 de décodage du code opératoire à exécuter ; et
- une étape 130 de traitement du code opératoire à exécuter.

L'étape 110 est identique à l'étape 10 décrite en relation avec la figure 1. Un code opératoire OPCODE est reçu et chargé par le processeur 1000.

L'étape 120 est identique à l'étape 12 décrite en relation avec la figure 1. Le code opératoire OPCODE est décodé, par une unité de décodage 1010 (DEC), en un ou plusieurs opérandes OP1, ..., OPN, et en une instruction INSTR.

L'étape 130 comprend des étapes similaires aux étapes 14, 16 et 18 décrites en relation avec la figure 1 mais comprend en outre l'utilisation d'un ou plusieurs codes opératoires précédemment exécutés par le processeur 1000. Le détail de l'étape 130 sera décrit ci-après en relation avec la description de l'architecture du processeur 1000.

Le processeur 1000 comprend :
- l'unité de décodage 1010 ;
- un multiplexeur 1020 (MUX) ;
- une banque de registres 1030 (REGLIST) ;
- une banque de registres de contexte 1040 (CONTEXT) ;
- un circuit de combinaison 1050 (COMB) ; et
- une unité arithmétique et logique 1060 (ALU).

Comme indiqué précédemment, l'unité de décodage 1010 permet de décoder le code opératoire OPCODE en plusieurs opérandes OP1, ..., OPN, et en une instruction INSTR. Ainsi, l'unité de décodage 1010 reçoit, en entrée, le code opératoire OPCODE chargé à l'étape 110, et fournit, en sortie, les opérandes OP1, ..., OPN, et l'instruction INSTR (étape 120). Plus particulièrement, l'unité de décodage 1010 fournit les opérandes OP1, ..., OPN à des entrées du multiplexeur 1020, et l'instruction INSTR à une entrée du circuit de combinaison 1050.

Le multiplexeur 1020 permet de choisir et de diriger les opérandes OP1, ..., OPN, nécessaires au traitement du code opératoire OPCODE vers l'unité arithmétique et logique 1060. En variante, le multiplexeur 1020 dirige tout ou partie des opérandes vers le circuit de combinaison 1050. Ainsi, le multiplexeur 1020 reçoit, en entrée, les opérandes OP1, ..., OPN et par exemple une sortie de la banque de registres 1030. Le multiplexeur 1020 transmet, en sortie, les opérandes OP1, ..., OPN à l'unité arithmétique et logique 1060 et à une entrée du circuit de combinaison 1050.

La banque de registres 1030 permet de stocker temporairement, dans des registres, des données, par exemple des opérandes OP1, ..., OPN du code opératoire OPCODE, des résultats de l'unité arithmétique et logique 1060, etc. La banque de registres 1030 peut permettre en outre de fournir d'autres opérandes, par exemple directement ou alors via le multiplexeur 1020, à l'unité arithmétique et logique 1060. La banque de registres 1030 reçoit, en entrée, une sortie de l'unité arithmétique et logique 1060 et par exemple la sortie du multiplexeur 1020. La banque de registres 1030 fournit, en sortie, des données à l'unité arithmétique et logique 1060 et, par exemple, au multiplexeur 1020.

La banque de registres de contexte 1040 est une banque de registres stockant, dans des registres, les codes opératoires précédemment exécutés par le processeur 1000. A titre d'exemple, la banque de registres de contexte 1040 peut stocker tout ou partie des codes opératoires précédemment exécutés dans une pile, ou dans une mémoire tampon circulaire, et/ou elle peut leur appliquer, pour les stocker, une fonction mathématique, par exemple une permutation. A titre d'exemple, la banque de registres de contexte 1040 peut prendre en compte le code opératoire à exécuter ou en cours d'exécution. La banque de registres de contexte 1040 reçoit, en entrée, le code opératoire OPCODE afin de le stocker. La banque de registres de contexte 1040 fournit, en sortie, des données au circuit de combinaison 1050.

Le circuit de combinaison 1050 permet de combiner l'instruction INSTR décodée du code opératoire OPCODE avec les données de la sortie de la banque de registres de contexte 1040. En d'autres termes, le circuit de combinaison 1050 permet de fournir, à l'unité arithmétique et logique 1060, une nouvelle instruction comportant une signature de données dépendant des codes opératoires précédemment exécutés par le processeur 1000. Le circuit de combinaison 1050 peut être, par exemple, commandé par un des opérandes décodés du code opératoire OPCODE. On appellera dans la suite de la description cette nouvelle instruction une instruction signée INSTR-SIG. Ainsi, le circuit de combinaison 1050 reçoit, en entrée, l'instruction INSTR et la sortie de la banque de registres de contexte 1040. Le circuit de combinaison 1050 fournit, en sortie, l'instruction signée INSTR-SIG à l'unité arithmétique et logique 1060. Selon une variante de réalisation, le circuit de combinaison 1050 peut ne combiner que certaines instructions INSTR décodées avec les données de la sortie de la banque de registres de contexte 1040, et transmettre les autres instructions INSTR décodées, sans les signer, directement à l'unité arithmétique et logique 1060.

L'unité arithmétique et logique 1060 permet de mettre en oeuvre le traitement et les calculs du code opératoire OPCODE. En d'autres termes, l'unité arithmétique et logique 1060 applique l'instruction signée INSTR-SIG aux opérandes fournis par le multiplexeur 1020. A titre d'exemple, l'unité arithmétique et logique 1060 peut aussi prendre en compte des données fournies par la banque de registres 1030. L'unité arithmétique et logique 1060 reçoit, en entrée, l'instruction INSTR-SIG du circuit de combinaison 1050, la sortie du multiplexeur 1040 et la sortie de la banque de registres 1030. L'unité arithmétique et logique 1060 fournit, en sortie, un signal de résultat R à l'entrée de la banque de registres 1030.

Le déroulement de l'étape 130 est le suivant. Le circuit de combinaison 1050 combine l'instruction INSTR avec des données provenant de la banque de registres de contexte 1040 pour fournir à l'unité arithmétique et logique 1060 l'instruction signée INSTR-SIG. L'unité arithmétique et logique 1060 effectue les calculs relatifs à l'instruction signée ISNTR-SIG et aux opérandes fournis par le multiplexeur 1020. L'unité arithmétique et logique demande ensuite accès à la banque de registres 1030 pour y stocker le signal de résultat R.

Un avantage de ce mode de réalisation est que, pour un code opératoire OPCODE identique, une unité arithmétique et logique d'un processeur usuel produira des signaux de résultats R différents de ceux produits par l'unité arithmétique et logique 1060 du processeur 1000 du mode de réalisation. Le signal de résultat R pourrait par exemple servir de signal de contrôle utilisé comme moyen d'authentifier un dispositif lors de son utilisation.

Un exemple d'application de ce mode de réalisation est le suivant. Un processeur reçoit généralement une ou plusieurs commandes comprenant chacune plusieurs codes opératoires. Pour utiliser le procédé de ce mode de réalisation, il suffit qu'une seule instruction relative à un de ces codes opératoires soit signée par le circuit de combinaison 1050. A titre d'exemple, une commande peut ne comprendre qu'une seule instruction signée permettant l'authentification du dispositif. Selon un autre exemple, la totalité des instructions liées à une même commande peuvent être signées par le circuit de combinaison 1050.

Un exemple d'application plus particulier peut être le suivant. On considère une imprimante comprenant un processeur du type du processeur 1000 et une cartouche d'encre adaptée à communiquer des données à l'imprimante. Ces données sont, par exemple, des niveaux de remplissage ou des données d'authentification de la cartouche d'encre. L'installation de la cartouche dans l'imprimante peut être suivie par une série de commandes envoyée par la cartouche à l'imprimante. Si la cartouche est destinée à être installée dans l'imprimante en question, le concepteur de la cartouche aura prévu de préparer les codes opératoires de la série de commandes pour qu'ils soient adaptés à l'architecture du processeur de l'imprimante. En d'autres termes, dans ce cas, les codes opératoires seront adaptés à prendre en compte les données de la banque de registres de contexte 1040. Cependant, si les codes opératoires de la série de commandes ne sont pas adaptés à l'architecture du processeur 1000, les résultats R fournis par l'unité arithmétique et logique 1060 ne seront pas ceux attendus par les autres circuits de l'imprimante qui pourront par exemple se mettre en défaut. On notera qu'il suffit qu'une seule instruction de la série de commandes soit signée pour actionner par exemple un mode défaut des autres circuits de l'imprimante. On pourra aussi décider de signer toutes les instructions de la série de commandes.

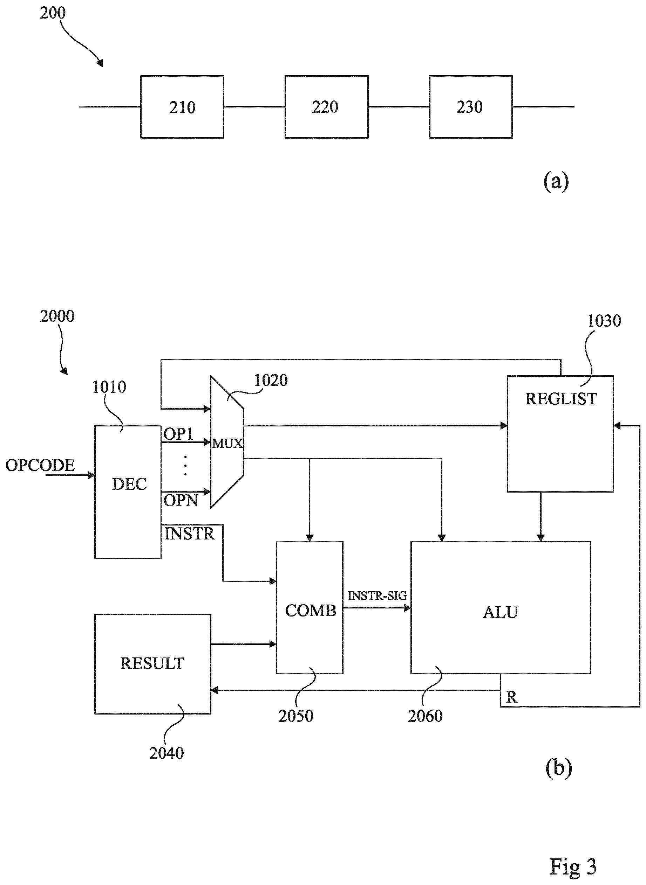

La figure 3 illustre un mode de mise en oeuvre d'un procédé 200 d'authentification d'un processeur 2000. La figure 3 comprend un organigramme (a) illustrant les étapes du procédé d'authentification et un schéma (b), sous forme de blocs, illustrant une architecture simplifiée du processeur 2000. Le procédé 200 et le processeur 2000 sont similaires au procédé 100 et au processeur 1000 décrits en relation avec la figure 2, les différences les séparant seront décrites ci-après.

Le procédé d'authentification 200 comprend :
- une étape 210 de chargement d'un code opératoire à exécuter ;
- une étape 220 de décodage du code opératoire à exécuter ; et
- une étape 230 de traitement du code opératoire à exécuter.

L'étape 210 est identique à l'étape 10 décrite en relation avec la figure 1. Un code opératoire OPCODE est reçu et chargé par le processeur 2000.

L'étape 220 est identique à l'étape 12 décrite en relation avec la figure 1. Le code opératoire OPCODE est décodé, par l'unité de décodage 1010 (DEC) du processeur 2000, en un ou plusieurs opérandes OP1, ..., OPN, et en une instruction INSTR.

L'étape 230 diffère de l'étape 130 décrite en relation avec la figure 2 en ce que l'utilisation de codes opératoires précédemment exécutés est remplacée par l'utilisation d'un ou plusieurs résultats précédents de l'unité arithmétique et logique 2060 du processeur 2000. Le détail de l'étape 230 sera décrit ci-après en relation avec la description de l'architecture du processeur 2000.

Le processeur 2000 comprend des éléments en commun avec le processeur 1000, ces éléments ne seront pas décrits à nouveau. Ainsi, le processeur 2000 comprend :
- l'unité de décodage 1010 ;
- le multiplexeur 1020 (MUX) ;
- la banque de registres 1030 (REGLIST) ;
- une banque de registres de résultats 2040 (RESULT) ;
- un circuit de combinaison 2050 (COMB) ; et
- l'unité arithmétique et logique 2060 (ALU).

La banque de registres de résultats 2040 est une banque de registres stockant les résultats précédents de l'unité arithmétique et logique 2060. A titre d'exemple, la banque de registres de résultats 2040 peut stocker les résultats précédents dans une pile, et/ou elle peut leur appliquer, pour les stocker, une fonction mathématique, par exemple une permutation. La banque de registres de résultats 2040 reçoit, en entrée, le résultat R de l'unité arithmétique et logique 2060 afin de le stocker. La banque de registres de résultats 2040 fournit, en sortie, des données au circuit de combinaison 2050, ces données dépendant donc des résultats précédents de l'unité arithmétique et logique 2060. La banque de registres de résultats 2040 est par exemple un registre adapté à fonctionner comme un registre à décalage dans lequel la dernière information stockée est la première information à être supprimée, ou comme un registre à décalage à réaction linéaire.

Le circuit de combinaison 2050 est similaire au circuit de combinaison 1050 décrit en relation avec la figure 2. Le circuit de combinaison 2050 combine l'instruction INSTR décodée du code opératoire OPCODE avec les données de la sortie de la banque de registres de résultats 2040. En d'autres termes, le circuit de combinaison 2050 fournit une instruction signée INSTR-SIG par les résultats précédents de l'unité arithmétique et logique 2060. Ainsi, le circuit de combinaison reçoit, en entrée, l'instruction INSTR et la sortie de la banque de registres de résultats 2040. Le circuit de combinaison 2050 fournit, en sortie, la nouvelle instruction INSTR-SIG à l'unité arithmétique et logique 2060. Selon une variante de réalisation, le circuit de combinaison 2050 peut ne combiner que certaines instructions INSTR décodées avec les données de la sortie de la banque de registres de résultats 2040, et transmettre les autres instructions INSTR, sans les signer, directement à l'unité arithmétique et logique 2060.

L'unité arithmétique et logique 2060 diffère de l'unité arithmétique et logique 1060 décrite en relation avec la figure 2 en ce qu'elle fournit en plus, en sortie, le signal de sortie R à la banque de registres 1030 et à la banque de registres de résultats 2040.

Le déroulement de l'étape 230 se différencie donc du déroulement de l'étape 130 décrite en relation à la figure 1, par le fait que les instructions qui sont signées sont signées avec des données prenant en compte les résultats précédents de l'unité arithmétique et logique 2060.

Ce mode de réalisation présente le même avantage que le mode de réalisation décrit en relation avec la figure 2.

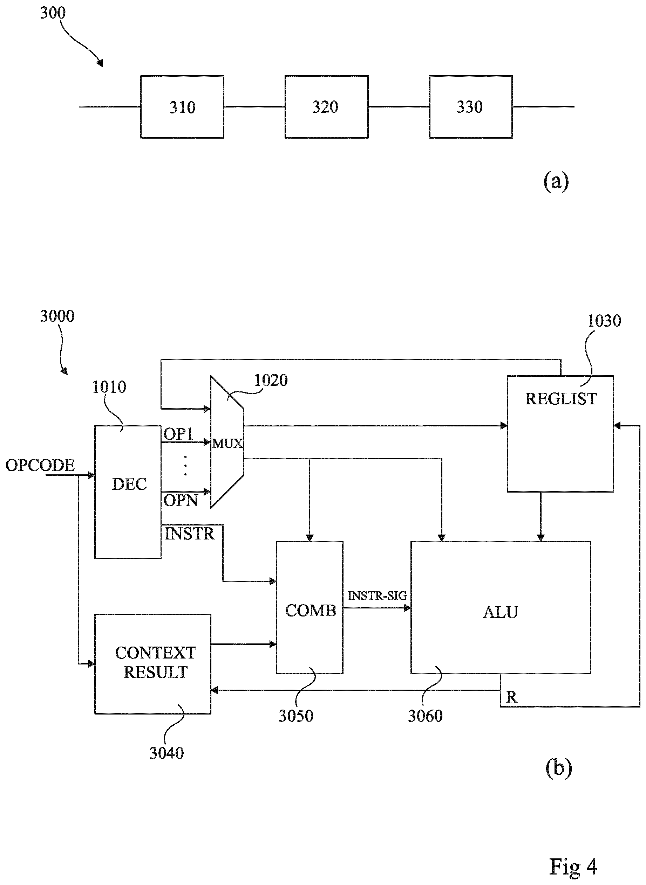

La figure 4 illustre un mode de mise en oeuvre d'un procédé 300 d'authentification d'un processeur 3000. La figure 4 comprend un organigramme (a) illustrant les étapes du procédé d'authentification et un schéma (b), sous forme de blocs, illustrant une architecture simplifiée du processeur 3000.

Les modes de réalisation décrits ci-après sont une combinaison des modes de réalisation décrits en relation avec les figures 2 et 3.

Le procédé d'authentification 300 comprend :
- une étape 310 de chargement d'un code opératoire à exécuter ;
- une étape 320 de décodage du code opératoire à exécuter ; et
- une étape 330 de traitement du code opératoire à exécuter.

L'étape 310 est identique à l'étape 10 décrite en relation avec la figure 1. Un code opératoire OPCODE est reçu et chargé par le processeur 3000.

L'étape 320 est identique à l'étape 12 décrite en relation avec la figure 1. Le code opératoire OPCODE est décodé, par l'unité de décodage 1010, en un ou plusieurs opérandes OP1, ..., OPN, et en une instruction INSTR.

L'étape 330 est une combinaison des étapes 130 et 230 décrites en relation avec les figures 2 et 3. Plus particulièrement, l'étape 330 comprend l'utilisation d'un ou plusieurs résultats précédents de l'unité arithmétique et logique 3060 du processeur 3000, et l'utilisation d'un ou plusieurs codes opératoires précédemment exécutés par le processeur 3000. Le détail de l'étape 330 sera décrit ci-après en relation avec la description de l'architecture du processeur 3000.

Le processeur 3000 comprend des éléments en commun avec les processeurs 1000 et 2000, ces éléments ne seront pas décrits à nouveau. Ainsi, le processeur 3000 comprend :
- l'unité de décodage 1010 (DEC) ;
- le multiplexeur 1020 (MUX) ;
- la banque de registres 1030 (REGLIST) ;
- une banque de registres de contexte et de résultats 3040 (CONTEXT RESULT) ;
- un circuit de combinaison 3050 (COMB) ; et
- une unité arithmétique et logique 3060 (ALU).

La banque de registres de contexte et de résultats 3040 est une combinaison de la banque de registres de contexte 1040 décrite en relation avec la figure 2 et de la banque de registres de résultats 2040 décrite en relation avec la figure 3. Plus particulièrement, la banque de registres de contexte et de résultats 3040 est adaptée à stocker des codes opératoires précédemment exécutés par le processeur 3000 et des résultats précédents de l'unité arithmétique et logique 3060. A titre d'exemple, la banque de registres de contexte et de résultats 3040 peut stocker les données dans une pile, et/ou elle peut leur appliquer, pour les stocker, une fonction mathématique, par exemple une permutation. La banque de registres de contexte et de résultats 3040 reçoit, en entrée, le résultat R de l'unité arithmétique et logique 3060 et le code opératoire OPCODE afin de les stocker. La banque de registres de contexte et de résultats 3040 fournit, en sortie, des données au circuit de combinaison 3050.

Le circuit de combinaison 3050 est similaire aux circuits de combinaison 1050 et 2050 décrits en relation avec les figures 1 et 2. Le circuit de combinaison 3050 combine l'instruction INSTR décodée du code opératoire OPCODE avec les données de la sortie de la banque de registres de contexte et de résultats 3040. En d'autres termes, le circuit de combinaison 3050 fournit une instruction signée INSTR-SIG par les codes opératoires précédemment exécutés par le processeur 3000 et par les résultats précédents de l'unité arithmétique et logique 3060. Ainsi, le circuit de combinaison reçoit, en entrée, l'instruction INSTR et la sortie de la banque de registres de contexte et de résultats 3040. Le circuit de combinaison 3050 fournit, en sortie, la nouvelle instruction INSTR-SIG à l'unité arithmétique et logique 3060. Selon une variante de réalisation, le circuit de combinaison 3050 peut ne combiner que certaines instructions INSTR décodées avec les données de la sortie de la banque de registres de contexte 3040, et transmettre les autres instructions INSTR décodées, sans les signer, directement à l'unité arithmétique et logique 3060.

L'unité arithmétique et logique 3060 est identique à l'unité arithmétique et logique 2060 décrite en relation avec la figure 3. Ainsi, l'unité arithmétique et logique 3060 fournit le signal de sortie R à la banque de registres 1030 et à la banque de registres de contexte et de résultats 3040.

Le déroulement de l'étape 330 se différencie du déroulement des étapes 130 et 230 décrites en relation avec les figures 2 et 3, par le fait que les instructions qui sont signées sont signées avec des données prenant en compte les codes opératoires précédemment exécutés par le processeur 3000 et prenant en compte les résultats précédents de l'unité arithmétique et logique 3060.

Ce mode de réalisation présente le même avantage que les modes de réalisation décrits en relation avec les figures 2 et 3.

Divers modes de réalisation et variantes ont été décrits. L'homme de l'art comprendra que certaines caractéristiques de ces divers modes de réalisation et variantes pourraient être combinées, et d'autres variantes apparaîtront à l'homme de l'art.

Enfin, la mise en oeuvre pratique des modes de réalisation et variantes décrits est à la portée de l'homme du métier à partir des indications fonctionnelles données ci-dessus.

## Revendications

1. Procédé (100, 300) d'authentification d'un dispositif par un processeur (1000, 3000) comportant une unité arithmétique et logique (1060, 3060), le procédé comprenant les étapes suivantes :
la réception, sur une première borne de l'unité arithmétique et logique (1060, 3060), d'au moins un opérande (OP1, ..., OPN) décodé d'au moins une partie d'un code opératoire à exécuter (OPCODE) envoyée par ledit dispositif au processeur ;
la réception, sur une deuxième borne de l'unité arithmétique et logique (1060, 3060), d'une première instruction (INSTR-SIG) combinant une deuxième instruction (INSTR) décodée du code opératoire à exécuter (OPCODE) et au moins un code opératoire exécuté précédemment ;
le traitement, par l'unité arithmétique et logique (1060, 3060), de ladite première instruction (INSTR-SIG) et du au moins un opérande (OP1, ..., OPN) pour obtenir un signal de résultat (R) ; et
l'authentification dudit dispositif en fonction dudit signal de résultat (R) fournie par l'unité arithmétique et logique (1060 ; 3060) après ledit traitement.

2. Procédé selon la revendication 1, dans lequel ladite au moins une partie du code opératoire à exécuter (OPCODE) représente la totalité du code opératoire à exécuter (OPCODE).

3. Procédé selon la revendication 1 ou 2, dans lequel ladite première instruction (INSTR-SIG) est fournie par une sortie d'un circuit de combinaison (1050, 3050).

4. Procédé selon la revendication 3, dans lequel le circuit de combinaison (1050, 3050) reçoit en entrée ladite deuxième instruction (INSTR) du code opératoire à exécuter (OPCODE) et des données prenant en compte ledit au moins un code opératoire exécuté précédemment.

5. Procédé selon l'une quelconque des revendications 1 à 4, dans lequel ledit au moins un code opératoire exécuté précédemment est stocké dans une banque de registres de contexte (1040).

6. Procédé selon l'une quelconque des revendications 1 à 5, dans lequel ladite première instruction (INSTR-SIG) combine ladite deuxième instruction (INSTR) décodée du code opératoire à exécuter (OPCODE), ledit au moins un code opératoire exécuté précédemment et au moins un résultat précédent de ladite unité arithmétique et logique (3060).

7. Processeur (1000, 3000) dans lequel une unité arithmétique et logique (1060, 3060) comprend :
une première borne adaptée à recevoir au moins un opérande (OP1, ..., OPN) décodé d'au moins une partie d'un code opératoire à exécuter (OPCODE) envoyé par un dispositif audit processeur ; et
une deuxième borne adaptée à recevoir une première instruction (INSTR-SIG) combinant une deuxième instruction (INSTR) décodée du code opératoire à exécuter (OPCODE) et au moins un code opératoire exécuté précédemment,
dans lequel l'unité arithmétique et logique (1060, 3060) est adaptée à traiter ladite première instruction (INSTR-SIG) reçue sur sa première borne et ledit au moins un opérande reçu sur sa deuxième borne pour fournir un signal de résultat (R) ; et
dans lequel le processeur est adaptée à authentifier ledit dispositif en fonction dudit signal de résultat (R) fournie par l'unité arithmétique et logique (1060 ; 3060) après ledit traitement.

8. Processeur selon la revendication 7, comprenant en outre un circuit de combinaison (1050, 3050) adapté à fournir ladite première instruction (INSTR-SIG) à la deuxième borne de l'unité arithmétique et logique (1060, 3060).

9. Processeur selon la revendication 7, dans lequel le circuit de combinaison (1050, 3050) est adapté à recevoir, en entrée, ladite deuxième instruction (INSTR) du code opératoire à exécuter (OPCODE) et des données prenant en compte ledit au moins un code opératoire exécuté précédemment.

10. Processeur selon l'une quelconque des revendications 7 à 9, comprenant en outre une banque de registres de contexte (1040) adaptée à stocker ledit au moins un code opératoire exécuté précédemment.

11. Processeur selon l'une quelconque des revendications 7 à 10, dans lequel ladite première instruction (INSTR-SIG) combine ladite deuxième instruction (INSTR) décodée du code opératoire à exécuter (OPCODE), ledit au moins un code opératoire exécuté précédemment et au moins un résultat précédent de ladite unité arithmétique et logique (3060).

12. Processeur selon l'une quelconque des revendications 7 à 11, comprenant en outre un circuit de décodage (1010) adapté à décoder le code opératoire (OPCODE) en ledit au moins un opérande et en ladite deuxième instruction.

13. Processeur selon l'une quelconque des revendications 7 à 12, comprenant en outre un multiplexeur (1020) adapté à recevoir ledit au moins un opérande (OP1, ..., OPN) et à le fournir à la première borne de l'unité arithmétique et logique (1060, 3060).

## Patentansprüche

1. Ein Verfahren (100, 300) zum Authentifizieren eines Geräts durch einen Prozessor (1000, 3000), der eine Arithmetik- und Logikeinheit (1060, 3060) aufweist, wobei das Verfahren die folgenden Schritte aufweist:
Empfangen, an einem ersten Anschluss der arithmetischen und logischen Einheit (1060, 3060), wenigstens eines decodierten Operanden (OP1, ..., OPN) wenigstens eines Teils eines auszuführenden Opcodes (OPCODE), der von dem Gerät an den Prozessor gesendet wird;
Empfangen, an einem zweiten Anschluss der arithmetischen und logischen Einheit (1060, 3060), einer ersten Anweisung (INSTR-SIG), die eine zweite decodierte Anweisung (INSTR) des auszuführenden Opcodes (OPCODE) und wenigstens einen zuvor ausgeführten Opcode kombiniert;
das Verarbeiten, durch die Arithmetik- und Logik-Einheit (1060, 3060), der ersten Anweisung (INSTR-SIG) und des wenigstens einen Operanden (OP1, ..., OPN), um ein Ergebniszeichen (R) zu erhalten; und
die Authentifizierung des Geräts als Funktion des Ergebniszeichens (R), das von der Arithmetik- und Logikeinheit (1060, 3060) nach der Verarbeitung bereitgestellt wird.

2. Das Verfahren nach Anspruch 1, wobei der wenigstens eine Teil des auszuführenden Opcodes (OPCODE) den gesamten auszuführenden Opcode (OPCODE) darstellt.

3. Das Verfahren nach Anspruch 1 oder 2, wobei die erste Anweisung (INSTR-SIG) durch einen Ausgang einer Kombinationsschaltung (1050, 3050) bereitgestellt wird.

4. Das Verfahren nach Anspruch 3, wobei die Kombinationsschaltung (1050, 3050) als Eingang die zweite Anweisung (INSTR) des auszuführenden Opcodes (OPCODE) und Daten empfängt, die den wenigstens einen zuvor ausgeführten Opcode berücksichtigen.

5. Das Verfahren nach einem der Ansprüche 1 bis 4, wobei der wenigstens eine zuvor ausgeführte Opcode in einer Kontextregisterbank (1040) gespeichert ist.

6. Das Verfahren nach einem der Ansprüche 1 bis 5, wobei die erste Anweisung (INSTR-SIG) die zweite decodierte Anweisung (INSTR) des auszuführenden Opcodes (OPCODE), den wenigstens einen zuvor ausgeführten Opcode und wenigstens ein vorheriges Ergebnis der Arithmetik- und Logikeinheit (3060)kombiniert.

7. Ein Prozessor (1000, 3000), wobei eine Arithmetik- und Logikeinheit (1060, 3060) Folgendes aufweist:
einen ersten Anschluss, der in der Lage ist, wenigstens einen decodierten Operanden (OP1, ..., OPN) von wenigstens einem Teil eines auszuführenden Opcodes (OPCODE) zu empfangen, der von einem Gerät an den Prozessor gesendet wird; und
einen zweiten Anschluss, der in der Lage ist, eine erste Anweisung (INSTR-SIG) zu empfangen, die eine zweite decodierte Anweisung (INSTR) eines auszuführenden Opcodes (OPCODE) und wenigstens einen zuvor ausgeführten Opcode kombiniert:
wobei die Arithmetik- und Logikeinheit (1060, 3060) dazu eingerichtet ist zum Verarbeiten der ersten Anweisung (INSTR-SIG), die an ihrem ersten Anschluss empfangen wird, und des wenigstens einen Operanden, der an ihrem zweiten Anschluss empfangen wird, um ein Ergebniszeichen (R) bereitzustellen; und
wobei der Prozessor dazu eingerichtet ist zum Authentifizieren des Geräts als Funktion des Ergebniszeichens (R), das von der Arithmetik- und Logikeinheit (1060, 3060) nach der Verarbeitung bereitgestellt wird.

8. Der Prozessor nach Anspruch 7, ferner aufweisend eine Kombinationsschaltung (1050, 3050), die in der Lage ist, die erste Anweisung (INSTR-SIG) an den zweiten Anschluss der Arithmetik- und Logikeinheit (1060, 3060) zu liefern.

9. Der Prozessor nach Anspruch 7, wobei die Kombinationsschaltung (1050, 3050) in der Lage ist zu empfangen, als Eingang, der zweiten Anweisung (INSTR) des auszuführenden Opcodes (OPCODE) und Daten, die den wenigstens einen zuvor ausgeführten Opcode berücksichtigen.

10. Der Prozessor nach einem der Ansprüche 7 bis 9, ferner aufweisend eine Kontextregisterbank (1040), die in der Lage ist, den wenigstens einen zuvor ausgeführten Opcode zu speichern.

11. Der Prozessor nach einem der Ansprüche 7 bis 10, wobei die erste Anweisung (INSTR-SIG) die zweite decodierte Anweisung (INSTR) des auszuführenden Opcodes (OPCODE), den wenigstens einen zuvor ausgeführten Opcode und wenigstens ein vorheriges Ergebnis der arithmetischen und logischen Einheit (3060) kombiniert.

12. Der Prozessor nach einem der Ansprüche 7 bis 11, der ferner eine Decodierschaltung (1010) aufweist, die in der Lage ist, den Opcode (OPCODE) in wenigstens einen Operanden und in die zweite Anweisung zu decodieren.

13. Der Prozessor nach einem der Ansprüche 7 bis 12, ferner aufweisend einen Multiplexer (1020), der in der Lage ist, den wenigstens einen Operanden (OP1, ..., OPN) zu empfangen und ihn an den ersten Anschluss der Arithmetik- und Logikeinheit (1060, 3060) zu liefern.

## Claims

1. A method (100, 300) of authenticating a device by a processor (1000, 3000), comprising an arithmetic and logic unit (1060, 3060), comprising the steps of:
receiving, on a first terminal of the arithmetic and logic unit (1060, 3060), at least one decoded operand (OP1, ..., OPN) of at least a portion of an opcode to be executed (OPCODE) sent by said device to the processor;
receiving, on a second terminal of the arithmetic and logic unit (1060, 3060), a first instruction (INSTR-SIG) combining a second decoded instruction (INSTR) of the opcode to be executed (OPCODE) and at least one previously-executed opcode;
the processing, by the arithmetic and logic unit (1060, 3060), of said first instruction (INSTR-SIG) and of said at least one operand (OP1, ..., OPN) to obtain a sign of result (R); and
the authentication of said device as a function of said result sign (R) provided by the arithmetic and logic unit (1060, 3060) after said processing.

2. The method of claim 1, wherein said at least one portion of the opcode to be executed (OPCODE) represents the entire opcode to be executed (OPCODE).

3. The method of claim 1 or 2, wherein said first instruction (INSTR-SIG) is delivered by an output of a combination circuit (1050, 3050).

4. The method of claim 3, wherein the combination circuit (1050, 3050) receives as an input said second instruction (INSTR) of the opcode to be executed (OPCODE) and data taking into account said at least one previously-executed opcode.

5. The method of any of claims 1 to 4, wherein said at least one previously-executed opcode is stored in a context register bank (1040).

6. The method of any of claims 1 to 5, wherein said first instruction (INSTR-SIG) combines said second decoded instruction (INSTR) of the opcode to be executed (OPCODE), said at least one previously-executed opcode, and at least one previous result of said arithmetic and logic unit (3060).

7. A processor (1000, 3000) wherein an arithmetic and logic unit (1060, 3060) comprises:
a first terminal capable of receiving at least one decoded operand (OP1, ..., OPN) of at least a portion of an opcode to be executed (OPCODE) sent by a device to said processor; and
a second terminal capable of receiving a first instruction (INSTR-SIG) combining a second decoded instruction (INSTR) of an opcode to be executed (OPCODE) and at least one previously-executed opcode
wherein the arithmetic and logic unit (1060, 3060) is adapted to process said first instruction (INSTR-SIG) received on its first terminal and said at least one operand received on its second terminal to provide a sign of result (R); and
wherein said processor is adapted to authenticate said device as a function of said result sign (R) provided by said arithmetic and logic unit (1060, 3060) after said processing.

8. The processor of claim 7, further comprising a combination circuit (1050, 3050) capable of delivering said first instruction (INSTR-SIG) to the second terminal of the arithmetic and logic unit (1060, 3060).

9. The processor of claim 7, wherein the combination circuit (1050, 3050) is capable of receiving, as an input, said second instruction (INSTR) of the opcode to be executed (OPCODE) and data taking into account said at least one previously-executed opcode.

10. The processor of any of claims 7 to 9, further comprising a context register bank (1040) capable of storing said at least one previously-executed opcode.

11. The processor of any of claims 7 to 10, wherein said first instruction (INSTR-SIG) combines said second decoded instruction (INSTR) of the opcode to be executed (OPCODE), said at least one previously-executed opcode, and at least one previous result of said arithmetic and logic unit (3060).

12. The processor of any of claims 7 to 11, further comprising a decoding circuit (1010) capable of decoding the opcode (OPCODE) into at least one operand and into said second instruction.

13. The processor of any of claims 7 to 12, further comprising a multiplexer (1020) capable of receiving said at least one operand (OP1, ..., OPN) and of delivering it to the first terminal of the arithmetic and logic unit (1060, 3060).
